Europäisches Patentamt

European Patent Office

Office européen des brevets

(19)

(11) Numéro de publication: **0 225 900**
**B1**

(12)                 FASCICULE DE BREVET EUROPEEN

(45) Date de publication du fascicule du brevet: **12.09.90**

(51) Int. Cl.⁵: **G 01 S 7/52, G 10 K 11/30**

(21) Numéro de dépôt: **86903419.9**

(22) Date de dépôt: **03.06.86**

(86) Numéro de dépôt international:
**PCT/FR86/00189**

(87) Numéro de publication internationale:
**WO 86/07466 18.12.86 Gazette 86/27**

(54) SONDE D'ECHOGRAPHIE ET ECHOGRAPHE MUNI D'UNE TELLE SONDE.

(30) Priorité: **07.06.85 FR 8508643**

(43) Date de publication de la demande:
**24.06.87 Bulletin 87/26**

(45) Mention de la délivrance du brevet: ʼ
**12.09.90 Bulletin 90/37**

(84) Etats contractants désignés:
**AT DE FR GB IT NL**

(56) Documents cités:
**FR-A- 622 035**
**US-A-3 735 336**
**US-A-4 168 482**
**US-A-4 332 018**
**US-A-4 445 207**
**US-A-4 480 324**

**Ultrasonic Testing,J.Szilard,1984,John Wiley &**
**Sons,page 219**

(73) Titulaire: **CGR ULTRASONIC**
**9, Chaussée de Paris**
**F-77102 Villenoy-les-Meaux (FR)**

(72) Inventeur: **MAERFELD, Charles**
**L'Orpiguiere**
**Chemin de la Constance F-06600 Antibes (FR)**

(74) Mandataire: **Ballot, Paul Denis Jacques et al**
**Cabinet Ballot-Schmit 7, rue le Sueur**
**F-75116 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 225 900 B1

**Description**

La présente invention a pour objet une sonde d'échographe et un échographe dont l'utilisation est particulièrement envisagée dans le domaine médical.

Parmi les procédés d'investigation pour représenter des parties du corps humain, l'échographie trouve une place privilégiée. En particulier elle est utilisée pour représenter des phénomènes d'écoulement du sang: souvent à l'endroit du coeur. Par ailleurs, elle sert aussi à représenter des coupes d'organes situés au droit d'une sonde de mesure. Un échographe pour réaliser des échographies comporte des moyens pour produire une impulsion acoustique et une sonde pour soumettre un milieu à examiner aux effets de cette impulsion. Il comporte encore une sonde pour recevoir l'onde acoustique rétrodiffusée par le milieu après que celui-ci ait été ainsi excité. Des moyens de traitement permettent la mesure des caractéristiques du signal reçu. Ces moyens de traitement peuvent être reliés à des moyens de mémorisation, ou directement à des moyens d'imagerie, pour représenter une image de la distribution des caractéristiques mesurées. Une mesure particulière concerne la caractérisation tissulaire: elle consiste à délivrer pour chaque partie du milieu, un coefficient d'absorption acoustique propre à la nature du milieu à l'endroit de la partie considérée. En effet, une onde ultrasonore est plus ou moins absorbée selon la nature du milieu. La mesure du coefficient d'absorption est donc représentative de la nature des tissus qui constituent le milieu.

Le coefficient d'absorption d'un tissu s'exprime en décibels par centimètre et par mégahertz. Ce coefficient appelé $\alpha$ dans la littérature spécialisée exprime que, par exemple, une onde ultrasonore émise à 10 MHz et ayant pénétré jusqu'à 5 cm à l'intérieur du milieu (10 cm aller, retour) aura subi une atténuation de 100 $\alpha$ dB (100 dB si $\alpha = 1$) en ressortant du milieu. Autrement dit, connaissant une fréquence de travail et connaissant l'amplitude des signaux reçus et provenant de deux points plus ou moins éloignés (dont la position est connue par la connaissance de la vitesse de propagation de l'onde acoustique dans le milieu), on peut en déduire la valeur du coefficient $\alpha$ en un point intermédiaire entre ces deux premiers points. Pour cette mesure du coefficient d'absorption, on mesure l'altération en fréquence du signal rétro-diffusé dans une bande spectrale. On tient compte du fait que si le spectre de l'impulsion qui excite le milieu est gaussien autour d'une fréquence centrale $f_0$, les spectres des signaux rétro-diffusés reçus concernant les parties du milieu situées de part et d'autre du point en question sont aussi gaussiens mais avec des fréquences centrales décroissantes selon que les points sont plus ou moins éloignés du lieu d'émission.

L'altération apportée par le milieu, définie comme représentative du coefficient d'absorption, consiste d'une part à amortir en amplitude le signal (l'énergie reçue décroit avec le temps) et consiste d'autre part à déplacer vers les fréquences basses la fréquence centrale du spectre gaussien du signal reçu. Dans la mesure d'un coefficient d'absorption on ne se préoccupe pas de l'atténuation en amplitude. Par contre, on interprète directement le déplacément de la fréquence centrale du spectre comme représentatif du tissu à caractériser. En définitive, c'est l'aptitude d'un tissu à "déplacer" plus on moins fortement la fréquence centrale en fonction d'une distance unitaire entre les deux points qui est la caractéristique mesurée.

Les sondes médicales d'échographe comportent généralement un élément réversible émetteur et récepteur d'ultrasons. Généralement, la profondeur de la zone explorée dans le milieu est inférieure à la distance de Fresnel de l'antenne constituée par cet élément. Pour améliorer le rapport signal à bruit en réception, il est alors connu de munir cette antenne de dispositifs de focalisation. Ces dispositifs peuvent être constitués par la forme de l'élément rayonnant ou par des circuits électroniques d'excitation retardée des différentes parties de cet élément. On peut mesurer dans un plan focal, perpendiculaire à la direction de propagation et passant par le point sur lequel on a focalisé l'antenne, la puissance d'un signal émis par cette antenne. L'antenne étant de dimension finie, on peut démontrer, et la pratique le confirme, que la valeur de cette puissance en fonction d'une abscisse portée sur un axe du plan, suit une fonction de Bessel. Les zéros de cette fonction de Bessel sont séparés du point focal par une distance qui est fonction de la fréquence et des dimensions de l'élément rayonnant. Il en résulte immédiatement que la directivité de l'antenne n'est pas constante avec la fréquence.

Ceci est particulièrement gênant pour la mesure de la caractérisation tissulaire, telle qu'elle vient d'être évoquée plus haut. En effet, dans cette caractérisation tissulaire on mesure la fréquence centrale d'un spectre gaussien, donc l'information spectrale en entier est prise en compte. L'altération différentielle du signal reçu, en fonction de la fréquence et de l'endroit de rétro-diffusion qui lui donne naissance, provoque alors des aberrations. L'exérience montre quelque fois que l'on observe un enrichissement du spectre de l'écho vers les fréquences hautes alors que la distance augmente. Cette constatation paradoxale correspondrait à une absorption négative, ce qui est incompréhensible. En fait ce phénomène est tout à fair attribuable à l'effet perturbateur dû à la dépendance de la directivité de l'antenne en fonction de la fréquence.

On sait provoquer des modifications de la courbe de puissance, ou figure de diffraction, donnée par une antenne quelconque. Comme cette figure de diffraction dans le plan focal est la transformée de Fourier de la répartition des amplitudes de vibration des points de l'antenne, il suffit de modifier cette répartition pour modifier la figure de diffraction. En acoustique, à une fréquence de travail donnée, on introduit une loi de répartition non uniforme des amplitudes transmises pour, par exemple, abaisser des lobes secondaires de directivité. Cette loi de répartition non uniforme consiste en définitive à pondérer en conséquence les contributions de chaque partie de l'antenne. Cependant avec cette technique, on ne modifie pas la directivité en fonction de la fréquence puisque la pondération est calculée à une fréquence donnée. On sait,

2

avec l'enseignement des documents US—A—4 480 324, US—A—4 168 482 et US—A—4 332 018 permet de résoudre des problèmes de directivité en émission acoustique sous marine. Cependant ces solutions conduisent, dans le domaine médical où les fréquences acoustiques sont plus grandes, à devoir réaliser des lames à interposer sur la trajet de l'onde acoustique dont l'épaisseur serait microscopique. Ceci est irréalisable en pratique.

L'invention permet alors de remédier aux inconvénients cités en affectant à chaque partie d'antenne une pondération qui puisse varier en fonction de la fréquence. Comme on le verra plus loin, cette pondération en fonction de la fréquence peut être obtenue mécaniquement. On dispose en série avec les parties de l'antenne des filtres absorbants dont la bande passante est dépendante des coordonnées de ces parties dans l'antenne. De cette manière on modifie la surface apparente de rayonnement de l'antenne en fonction de la fréquence. On s'arrange pour que la modification corresponde à une constance de la directivité.

L'invention concerne une sonde d'échographe du type comportant un élément rayonnant pour rayonner par au moins une de ses faces, une onde acoustique quand il est soumis à une excitation et/ou pour recevoir par cette face une onde acoustique et élaborer un signal correspondant à cette onde quand il la reçoit, la sonde comportant des moyens pour modifier la bande passante des différentes parties de la face de l'élément en fonction des coordonnées de ces parties de manière à rendre la directivité de la sonde indépendante de la fréquence, caractérisée en ce que lesdits moyens pour modifier comportent une lame absorbante, dont l'epaisseur est variable et dont le coefficient d'absorption varie en fonction de la fréquence, l'epaisseur de la lame pour lesdites parties, mesurée en terme de longueur d'onde de l'onde acoustique, étant telle que les absorptions correspondantes modifient les bandes passantes des dites parties.

La présente invention sera mieux comprise à la lecture de la description qui suit et à l'examen des figures qui l'accompagnent. Elles ne sont données qu'à titre indicatif et nullement limitatif de l'invention. Sur les figures, les mêmes repères désignent les mêmes éléments. Elles montrent:

Figures 1a et 1b: des représentations schématiques de figures de diffraction d'élément rayonnant sans et avec l'invention;

Figure 2: une variante mécanique de réalisation de l'invention;

Figure 3a à 3c: des exemples de réalisation de filtres mécaniques en un matériau peu diffusant et correspondant à la variante de la figure 2;

Figures 4a et 4b: un autre exemple de réalisation en un autre matériau, diffusant celui-là;

Figure 5: l'application de la variante mécanique à un réseau de transducteurs constituant l'élément rayonnant;

Figures 6a et 6b: un exemple de mise en oeuvre de la variante électronique des filtres en commun avec la mise en oeuvre de la variante mécanique:

Figure 7: un exemple d'application de la mise en oeuvre de l'invention.

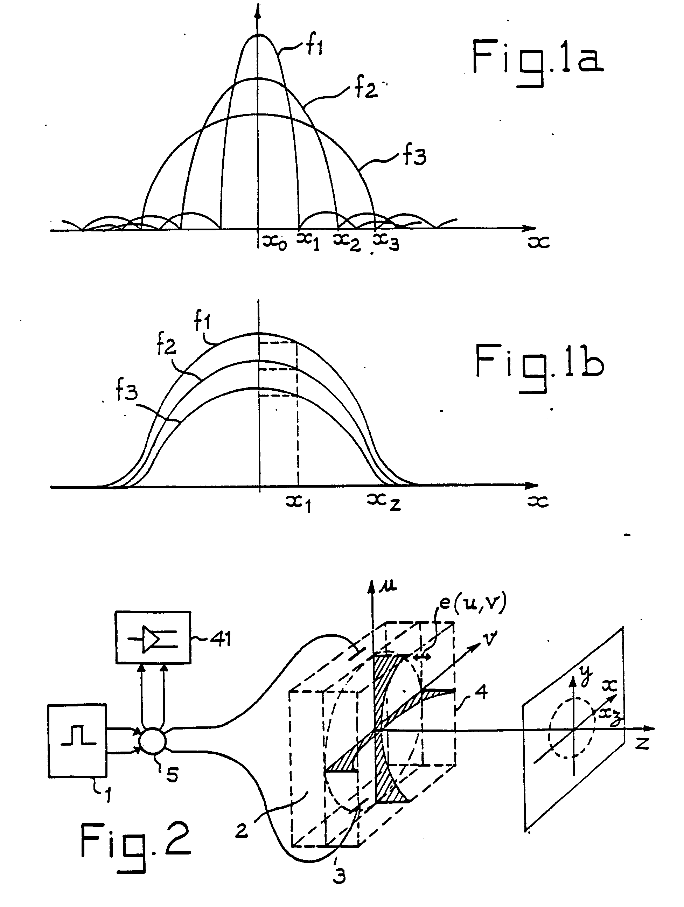

La figure 1 représente la figure de diffraction d'un élément rayonnant selon l'état de la technique. Il y apparaît clairement que la directivité est dépendante de la fréquence. En particulier les zéros, les points récursifs $x_1$, $x_2$, . . ., sont espacés de la trace $x_o$ du foyer en fonction de la composante de fréquence $f_1$, $f_2$ ou $f_3$, de l'onde considérée. Par ailleurs, en trois abscisses, $x_o$, $x_1$ et $x_2$, les contributions spectrales ne suivent pas une evolution homogène. En $x_1$, la contribution $f_1$ est la moins forte, en $x_o$ elle est la plus forte, en $x_1$ c'est la contribution $f_2$ qui est la plus forte etc. Comme dans la mesure de caractérisation tissulaire, le spectre comportant $f_1$, $f_2$ et $f_3$ est pris en compte globalement, cette situation n'est pas propice à l'homogénéïté es résultats. La figure 1b représente dans les mêmes conditions, pour les mêmes fréquences, la figure de diffraction schématique obtenue avec les moyens de l'invention. Pour ce faire on a pondéré chaque partie de l'antenne, d'une part en fonction de son emplacement géographique, et d'autre part en fonction de la fréquence de telle manière que les zéros de la figure de diffraction soient tous situés en des mêmes endroits $x_z$. Il en résulte une répartition homogène des contributions des différentes parties du spectre.

Le calcul du filtre à une abscisse donnée sur l'antenne doit être fait pour obtenir les courbes de puissance qui apparaissent sur la figure 1b. En effet, cette figure renseigne en fonction des fréquences sur les fonctions de transfert des filtres. La procédure à suivre pour les calculs des filtres est la suivante: partant de la figure 1a, connue et spécifique de l'élément d'antenne utilisé, on effectue pour chaque fréquence les pondérations nécessaires en chaque endroit de l'antenne pour ramener les zéros ou les minima en des endroits convenus, en $x_z$. On mesure alors en chaque endroit d'antenne la pondération relative à cette fréquence qui permet d'obtenir cette figure de diffraction pondérée. De ces mesures de pondération faites pour toutes les fréquences, on déduit les filtres affectés à chaque abscisse.

Dans une première variante de l'invention, on réalise le filtre au moyen d'une lame d'absorption. Sur la figure 2, on représente une telle lame montée dans une sonde d'un échographe. Dans l'exemple, l'échographe comporte un émetteur 1 relié à un élément piézo-électrique 2 pour rayonner par une de ses faces 3 une onde acoustique. L'onde acoustique se propage selon un axe Z dans un milieu non représenté. Quand la sonde est réversible, l'élément 2 peut recevoir sur sa face 3 une onde acoustique qu'il transforme en un signal électrique correspondant et que l'on peut recevoir dans un récepteur 41. Ce récepteur 41 représente symboliquement tous les traitements ultérieurs que subit le signal reçu. Un duplexeur 5 permet la réversibilité du montage en orientant correctement la transmission des signaux électriques. Dans l'invention, pour palier le défaut de directivité de l'élément 2 en fonction de la fréquence, on a interposé entre la face 3 et le milieu, une lame 4 dont l'épaisseur dépend des coordonnées de ses points. Autrement dit, l'épaisseur $e$ de la lame est fonction des coordonnées $u$ et $v$ des points de la lame donnée dans un plan perpendiculaire à Z.

Pour atteindre le but fixé, on choisit pour la lame un matériau dont le coefficient d'absorption $\alpha$ est de la forme: $\alpha = \alpha_0 f^m$. Dans cette expression, $m$ est le coefficient correcteur du coefficient d'absorption acoustique de la lame en fonction de la fréquence f. En effet, comme pour les tissus à caractériser, les matériaux ont des coefficients d'absorption dépendant de la fréquence. C'est justement cette dépendance de la fréquence qui est mise ici à profit pour réaliser un filtre fréquentiel. On effectue la pondération en interposant sur le parcours des vibrations élémentaires en provenance des parties élémentaires de la surface 3 des épaisseurs plus ou moins grandes de matériaux. De cette manière ou pondère plus ou moins fort. L'épaisseur en tous points de la lame, de coordonnée (u, v), est donnée dans l'invention sous la forme d'une formule.

Cette formule est la suivante:

$$e\,(u,\,v) = e_0 + \sum_{i=o}^{i=m} a_i \cdot u^{m-i} \cdot v^i$$

Dans cette formule, $e_0$ est une épaisseur choisie en fonction de la faisabilité de la lame (ce point sera explicité ultérieurement); $u$ et $v$ sont les coordonnées des points de la lame; $m$ est le coefficient correcteur précité; $i$ est un indice courant. Le coefficient $m$ est spécifique du matériau constituant la lame de même que $\alpha_0$. Le matériau est choisi de préférence de telle manière que $m$ soit sensiblement un nombre entier: par exemple 1 ou 2 ... Les paramètres $a_i$ sont les paramètres du polynome en $u$ et $v$ qui déterminent $e$. Ils peuvent être choisis comme on le désire. L'expression de $e$ donnée ci-dessus est telle que l'amplitude vibratoire A (u, v) en sortie de la lame en chaque point devient de la forme suivante:

$$A\,(u,\,v) = C.\exp\, - \alpha_0 \sum_{i=o}^{i=m} a_i\, U^{m-i}\, V^i$$

Dans cette expression C est une constante et U et V sont des coordonnées réduites égales respectivement à u.f. et v.f.

Si on somme ces contributions vibratoires pour connaître la figure de diffraction dans le plan focal, on se rend compte que cette somme aboutit à un résultat maintenant indépendant de la fréquence. Il en résulte que toute épaisseur de la lame qui satisfait à l'expression vue plus haut de e (u,v) est une solution a notre problème.

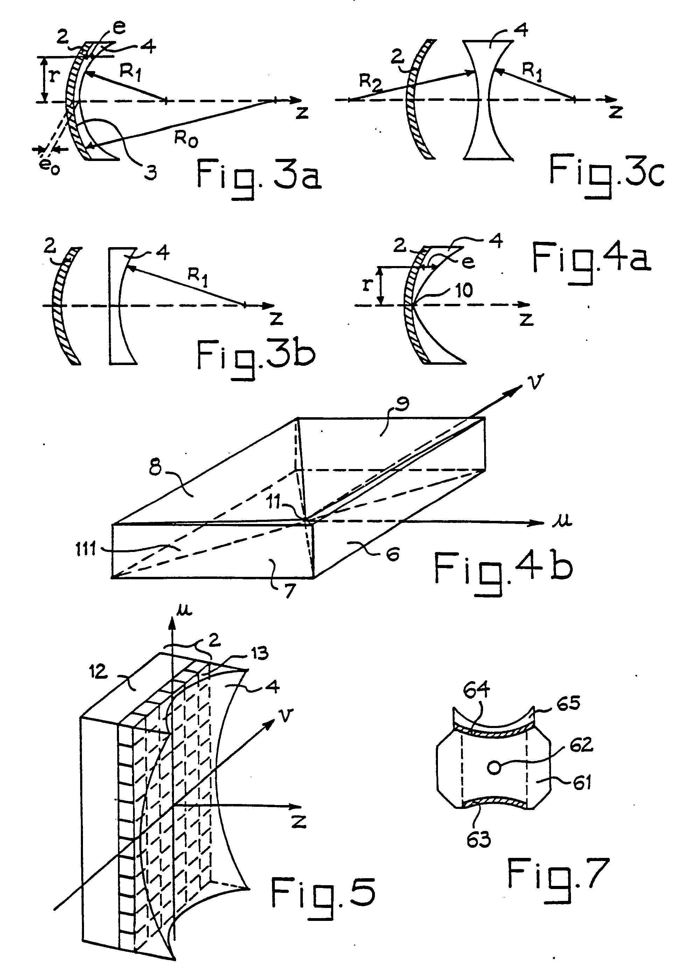

Les figures 3a à 3c représentent des exemples de réalisation dans lesquels le matériau de la lame est tel que son coefficient correcteur $m$ vaut 2. Ce matériau est par exemple un polyuréthane visco-élastique ou une résine polymérisée. Une solution particulièrement intéressante des paramètres $a_i$ est telle que $a_0 = a_2$ et que $a_1$ vaut zéro. Dans ces conditions, l'épaisseur peut s'écrire: $e\,(u,v) = e_0 + a_0\, r^2$. Dans cette expression $r$ est la distance radiale d'un point quelconque de la lame à l'axe Z de propagation de l'onde. Autrement dit, dans ce cas, l'épaisseur croît paraboliquement avec la distance radiale. Si l'élément rayonnant 2 a la forme d'une coupelle sphérique de rayon $R_0$, il existe une solution particulière de la lame 4 pour laquelle cette lame peut être avantageusement obtenue par deux usinages sphériques: un de rayon $R_0$ et un autre de rayon $R_1$. La relation qui lit alors $R_1$ à $a_0$ et à $R_0$ est la suivante:

$$a_0 = \frac{1}{2}\left(\frac{1}{R_1} - \frac{1}{R_0}\right)$$

Dans cette solution préférée, la lame 4 peut alors être collée sur la face émissive 3 de l'élément 2 en forme de coupelle: figure 3a. Quand la lame 4 est colée à la coupelle 2, il est possible de réduire au minimum l'épaisseur $e_0$ au milieu de la lame. On remarque cependant, la croissance de l'épaisseur étant parabolique en fonction de la distance radial $r$, que cette épaisseur $e_0$ peut difficilement être nulle. En effet, à proximité du centre les surfaces de part et d'autre de la lame tendent à être tangentes l'une à l'autre. Ne pouvant réduire l'épaisseur $e_0$ à zéro, on s'efforce de la rendre la plus faible possible.

Les figures 3b et 3c montrent des variantes de réalisation de la lame 4 dans lesquelles les deux faces de cette lame sont également obtenues par usinages sphériques. Dans la figure 3b une des sphères possède même un rayon infini: l'usinage est plan. Dans la figure 3c les deux sphères d'usinage sont extérieures l'une à l'autre. La seconde lame est une lame plan-concave, la troisième lame est une lame bi-concave. On peut approcher l'usinage parabolique envisagé par un usinage sphérique dans la mesure où l'angle au centre des extrémités de la surface concave est faible. Cette approximation judicieuse permet de résoudre efficacement des problèmes de fabrication.

Les figures 4a et 4b montrent en coupe et en perspective l'allure d'une autre lame possèdant les caractéristiques de filtrage fréquentiel préconisées par l'invention. Dans cet exemple le matériau de la lame est un matériau dont l'absorption provient essentiellement de la diffusion. Par exemple, le matériau de la lame est peu visco-élastique, il est chargé par des inhomogénéïtés qui viennent augmenter la diffusion. Ce matériau est par exemple une résine epoxy. Les inhomogénéïtés sont par exemple des micro-billes creuses phénoliques ou en verre. Dans ce cas, le coefficient d'absorption $\alpha$ de ce matériau est proportionnel à la fréquence. Car pour un tel matériau, le coefficient $m$ est voisin de 1. En reportant $m$ dans l'expression de e (u,v), on peut écrire:

$$e\ (u,v) = e_o + a_o\ u + a_1 v = e_o + a_o r$$

si $a_o$ est choisi égal à $a_1$.

Dans cette expression $r$ est la distance radiale d'un point quelconque de la lame à l'axe de propagation Z. Sur la figure 4a, la lame 4a peut avoir la forme d'un volume de révolution dont la section, passant par un plan contenant l'axe de révolution (Z), approche la forme d'un triangle. Dans ces conditions l'épaisseur de la lame est bien proportionnelle à la distance radiale des points de la lame à l'axe de révolution. Sur la figure 4a, la section génératrice du volume de révolution est même prévue pour s'adapter à l'intérieur d'une coupelle rayonnante 2, de forme sphérique. On sait réaliser de tels volumes de révolution où en définitive l'épaisseur $e_o$ au centre est nulle ou quasi nulle. En effet, les deux faces de la lame 4, au centre 10, sont sécantes l'une à l'autre.

La forme de la lame peut aussi être constituée de quatre pyramides, cotées 6 à 9 figure 4b, réunies entre elles par leur sommet 11 et reliées l'une à l'autre, deux à deux, par des flancs tels que 111. Les pyramides se rejoignent dans des plans où u = v. L'intérêt de cette solution réside aussi dans le fait que la tendance des deux faces de la lame, à l'endroit où elles se rapprochent au sommet 11, est une tendance sécante. Au sommet 11, les deux faces de la lame ne sont pas tangentes l'une à l'autre. Dans ces conditions, il est aussi possible d'y réaliser une épaisseur $e_o$ nulle. On sait bien par ailleurs usiner des pièces en forme de pyramide.

La loi de variation du coefficient d'absorption $\alpha$ avec la fréquence est approximée à $a_o f^m$ dans la bande passante utile des signaux mesurés, $m$ valent généralement 1 ou 2. La détermination de la valeur des coefficients $a_o$ à $a_2$ est donnée par la connaissance de la bande passante du filtre en un point quelconque de coordonnées $u$ et $v$ de la lame. En effet, de manière à obtenir la figure de diffraction de la figure 1b, on a été amené précédemment à calculer des pondérations variables en fonction des coordonnées des points de l'élément rayonnant, et en fonction de la fréquence de travail retenue. Il suffit maintenant de choisir un point quelconque, de coordonnées uv, et de calculer l'épaisseur correspondante de la lame 4 au droit de ce point pour que la réponse fréquentielle de la lame corresponde (à un facteur près: l'épaisseur $e_o$) à la courbe de pondération fréquencielle affectée à ce point. On peut en déduire, connaissant $u$ et $v$ la valeur des coefficients $a_o$ à $a_2$, ou tous les coefficients $a_i$ utiles. De la connaissance de $a_o$, on tire la connaissance de $R_1$. On peut montrer par le calcul et l'expérience le confirme, que pour un matériau d'indice $m$ donné, il n'existe qu'une loi déterminant le profil de l'épaisseur de la lame en fonction des coordonnées de ses points.

Du fait de la différence d'épaisseur interposée sur les trajets de propagation des vibrations acoustiques émanant des différents points de l'antenne, il se produit un phénomène de focalisation parasite analogue à un phénomène connu en optique quand on interpose une lentille sur un axe optique. Dans la pratique, les sondes d'échographie sont appliquées directement contre le milieu à insonifier. La focalisation de l'élément rayonnant tient déjà compte de l'indice de propagation des ondes acoustiques dans ce milieu. Deux cas peuvent alors se produire. Dans le premier, l'indice de propagation des ondes acoustiques dans le matériau de la lame est identique à celui du milieu insonifié (ou du moins à la moyenne des indices de propagation des parties de ce milieu dans les régions effectivement caractérisées). Il n'y a alors pas lieu de modifier en quoi que ce soit la focalisation originelle: la lame interposée ne fait que décaler les plans de mesure (d'une épaisseur $e_o$). Par contre, dans un deuxième cas, si cet indice de propagation acoustique dans la lame n'est pas le même que celui du milieu, la forme concave de la lame provoque une modification de la focalisation initiale de l'élément rayonnant. Dans ces conditions, il y a lieu de modifier en conséquence la focale de cet élément rayonnant pour tenir compte de l'altération apportée par la présence de la lame. On sait dans le domaine optique résoudre ces problèmes. Leur solution est du même ordre ici. Par exemple, le rayon de courbure de la coupelle (2) peut être modifié.

La figure 5 représente un élément rayonnant à transducteurs multiples. L'élément rayonnant 2 comporte ici un socle 12 surmonté d'une pluralité de transducteurs piézo-électriques 13. Chaque transducteur peut être relié à un circuit d'excitation électrique indépendant. Dans ce cas la focalisation de l'onde acoustique sur le foyer placé sur l'axe Z peut être obtenue en retardant convenablement les uns par rapport aux autres les signaux électriques qui attaquent chacun des transducteurs 13. Cette technique est déjà connue de l'état de la technique. La lame d'absorption 4 d'épaisseur variable en fonction des coordonnées des points est appliquée au-dessus de l'ensemble des transducteurs 13. Elle est par exemple la même que celle décrite dans la figure 3b. La lame 4 assure alors, en présence d'une focalisation électronique cette fois, son rôle d'homo généïsation de la directivité de l'élément rayonnant en fonction de la fréquence.

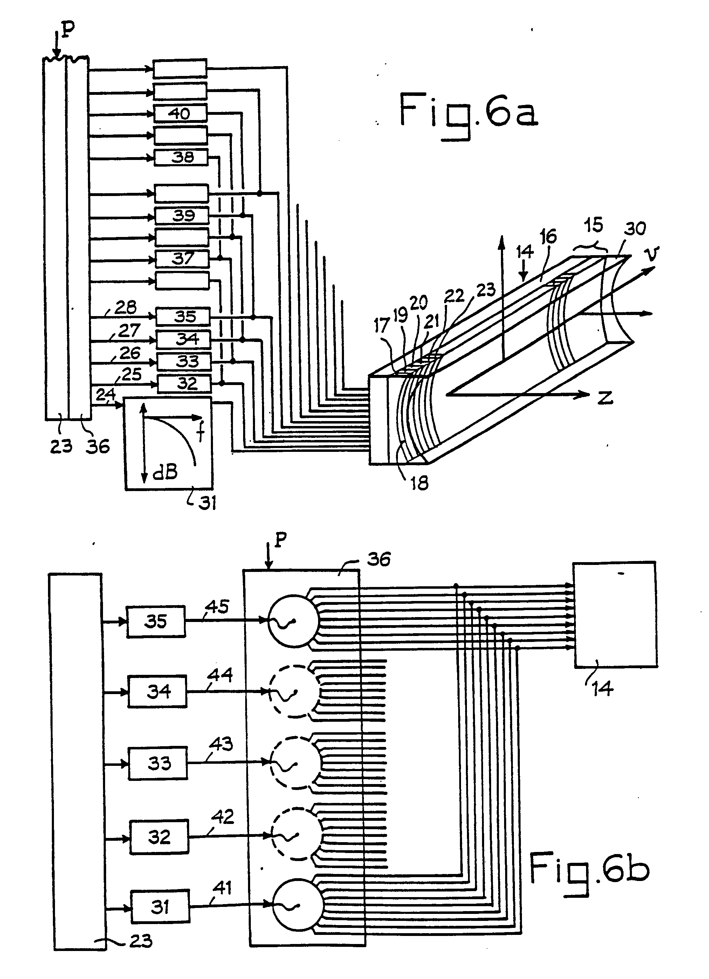

Par contre, les figures 6a et 6b rendent compte de la mise en oeuvre d'une homogénéïsation de la directivité de l'élément rayonnant en fonction de la fréquence obtenue par des moyens électroniques. En fait, dans cette variante représentée par ces figures 6a et 6b, l'homogénéïsation de la directivité est obtenue par des moyens mixtes: mécaniques et électroniques. Par leur simplicité de fabrications, les moyens mécaniques (jouant sur l'épaisseur variable d'une lame interposée) sont préférés. Ils sont bien adaptés à des éléments rayonnants dont la direction de propagation Z est constante (figure 2 à 4b) ou à des éléments rayonnant dont la direction de propagation peut osciller angulairement autour d'une direction principale (direction Z de la figure 5). Par contre, ces moyens mécaniques sont mals adaptés à des situations où on cherche à obtenir un balayage latéral du milieu. Dans un balayage latéral, on s'attend à ce que l'axe de propagation se déplace parallèlement à lui-même dans une direction perpendiculaire à cet axe.

Par exemple sur la figure 6a, l'antenne 14 est calculée pour émettre des impulsions acoustiques qui se propagent dans une direction Z se déplaçant petit à petit parallèlement à elle-même selon une direction v perpendiculaire à Z. On comprend aisément que ce balayage en translation ne peut pas être obtenu, avec le perfectionnement de l'invention, dans le cas de l'antenne de la figure 5. En effet, si l'axe Z s'y déplace parallèlement à lui-même, la variation d'épaisseur de la lame ne sera pas la même selon l'abscisse u quelque soit l'ordonnée v où l'on se trouve. C'est particulièrement pour cette application de balayage en translation que la variante électronique de l'invention est montrée ici.

L'élément rayonnant 15 de l'antenne 14 de la figure 6a ressemble un peu à celui de la figure 5. Il comporte en particulier un socle 16 qui supporte une pluralité de transducteurs piézo-électriques accolés tels que 17. Les transducteurs 17 sont de forme allongée et présentent une surface d'émission concave de manière à focaliser leur émission dans un plan contenant l'axe de propagation Z et la direction v d'alignement côte à côte de ces transducteurs entre eux. Le profil 18 de la surface d'émission des transducteurs leur confère donc une caractéristique de focalisation mécanique. La focalisation des ondes acoustiques dans un autre plan contenant l'axe Z et l'axe u perpendiculaire à l'axe v est obtenue en groupant les transducteurs, (par exemple cinq par cinq: transducteurs 17, 19, 20, 21 et 22), et en retardant dans un circuit de retard 23 relativement les uns par rapport aux autres des signaux 24 à 28 qui attaquent ces différents transducteurs. De cette manière, l'onde acoustique émise est focalisée sur un foyer se trouvant à l'intersection des deux plans. Le balayage lui est obtenu en décalant le groupement des transducteurs utilisés pour l'émission de l'onde acoustique. Ce décalage dans un exemple représenté sur la figure 6a comporte des décalages d'un transducteur. Dans un deuxième groupement le transducteur 17 est abandonné, par contre un transducteur 29 adjacent au transducteur 22 est sollicité. Ainsi de suite le balayage du milieu se poursuit.

L'homogénéïsation de la directivité de l'antenne en fonction de la fréquence est obtenue ici également de manière mixte. Selon la direction u, l'homogénéïsation est obtenue mécaniquement: c'est-à-dire par adjonction d'une lame absorbante 30 d'épaisseur variable en fonction de l'abscisse des points de la lame. Le profil de cette lame 30 est analogue au profil de la lame 4 de la figure 3a. Ce profil sert de contour générateur à une lame cylindrique dont les génératrices sont orientées selon l'axe v.

L'homogénéïsation, selon cet axe v, de la directivité de l'antenne en fonction de la fréquence est obtenue ici par interposition de filtres fréquenciels tels que 31, dans le circuit d'excitation des différents transducteurs d'un groupement. Les différents filtres 31 à 35 des transducteurs d'un groupement n'ont pas la même bande passante: le coefficient d'atténuation en fonction de la fréquence qu'ils introduisent dépend de la position dans le groupement de l'élément transducteur auquel ils sont reliés. Pour simplifier, le filtre 33 en série avec le transducteur 20 du milieu à une bande passante plus grande que les filtres 32 et 34 identiques, qui sont en série avec les transducteurs 19 et 21 adjacents de part et d'autre du transducteur 20. Les filtres 31 et 35 identiques, en série avec les transducteurs respectivement 17 et 22, ont encore une bande passante plus réduite. Le calcul de ces filtres est effectué conformément au calcul entrepris pour déterminer l'épaisseur de la lame.

Autrement dit, le groupement des cinq premiers transducteurs qui possède une focalisation mécanique dans un plan contenant l'axe v et électronique dans un plan contenant l'axe u possèdent maintenant des moyens mécaniques d'homogénéïsation de la directivité en fonction de la fréquence qui sont mécaniques selon l'axe u et électroniques (les filtres 31 à 35) selon l'axe v. Il est nécessaire de distinguer la différence qui existe entre les moyens de retard 23 provoquant la focalisation électronique et les moyens de filtres en fréquence 31 à 35 provoquant l'homogénéïté de la directivité. Les filtres électroniques sont les équivalents du filtre mécanique constitué par la lame. L'application au balayage de la variante électronique n'est qu'un exemple parmi d'autres pour mettre en oeuvre cette variante.

Une fois que la direction de pointage correspondant à un premier groupement a été explorée, on balaye latéralement le milieu en se décalant d'un cran et en explorant le milieu dans une direction de pointage relatif au deuxième groupement: par exemple constitués des transducteurs 19, 20, 21, 22 et 29. La focalisation mécanique est obtenue du fait de la nature cylindrique de la face 18. La focalisation électronique est obtenue par commutation des signaux 24 à 28 sur les nouveaux transducteurs retenus. Cette commutation qui est bien connue de l'état de la technique n'est pas décrite ici. Cette commutation est provoquée par des circuits électroniques 36 recevant par ailleurs un signal de séquencement P qui la détermine.

L'interposition des filtres électroniques avant les transducteurs peut se faire de deux manières. Dans une première manière décrite à la figure 6a, les moyens de commutation 36 et de retard 23 sont suivis en cascade par les filtres d'homogénéisation de la directivité. En conséquence, chaque transducteur se verra affecter plusieurs filtres. Il se verra affecter autant de filtres que de nombre de fois auquel il appartiendra à un groupement utilisé dans le balayage. Dans l'exemple, avec des groupements de cinq transducteurs, et avec des décalages d'un transducteur, chaque transducteur (hormis les quatres situés à chaque extrémité de l'élément rayonnant) intervient cinq fois: pour cinq directions de pointage. Il va donc lui être affecté cinq filtres dont la fonction de transfert est chaque fois relative à la position qu'occupera ce transducteur dans le groupement concernant la direction de pointage en question.

Mais les transducteurs d'un groupement, situés de part et d'autre de l'axe central de propagation du groupement de transducteurs, doivent être pondérés en fréquence par des filtres de même bande passante, il en résulte que chaque transducteur pourra être relié à un même filtre que précédemment quand il occupera dans un groupement suivant une position symétrique de celle occupée au préalable. Ainsi, le transducteur 20, central au premier groupement, est pour ce premier groupement en série avec le filtre 33. Dans le deuxième groupement, décalé d'un cran, il est en série avec le filtre 37. Dans le troisième groupement, il est en série avec le filtre 38 . . . De même, le transducteur 22, qui est le cinquième à partir de l'extrémité est successivement en série avec un filtre 35, 39, 40 . . . Pour la quatrième direction de pointage, ce transducteur 22 qui est encore sollicité peut être mis une deuxième fois en série avec son filtre 39. Pour une cinquième direction de pointage, il peut être remis en série avec son filtre initial 35.

On peut montrer que pour une barrette de transducteurs constituant l'élément rayonnant 15 et contenant N transducteurs, il y aura lieu de réaliser N filtres tels que le filtre 31 (identique au filtre 35); il sera également nécessaire de fabriquer N—1 filtres tels que le filtre 32 (ou 34, ou 37, ou 39). Enfin, il faudra fabriquer N—2 filtres tels que le filtre 33. Dans un exemple où on utilise une barrette de 80 transducteurs piézo-électriques, cette solution est envisageable puisque le nombre des filtres n'est pas prohibitif et que par ailleurs les types de filtres étant limités à trois leurs fabrications en série peut être entreprises.

Par contre si on juge cette réalisation trop coûteuse, on peut procéder autrement en déplaçant les moyens de commutation 36. La figure 6b montre que ces moyens de commutation 36 ont été interposés entre les filtres et l'antenne 14. Dans ce cas, les moyens de retard 23 assurant la focalisation électronique sont directement en amont des filtres 31 à 35 assurant l'homogénéité de la directivité en fonction de la fréquence pour un groupement générique de cinq transducteurs. Les signaux 41 à 45 qui émanent de ces filtres attaquent le commutateur 36 recevant l'ordre P qui agit sur des sélecteurs tels que 51 à 55 pour orienter ces signaux sur des transducteurs choisis dans un groupement de transducteurs. Les moyens 36 de commutation sont des moyens connus de l'état de la technique. L'homogénéisation électronique étant ainsi obtenue selon l'axe v, l'homogénéisation selon l'axe u est obtenue par la présence de la lame 30 cylindrique.

La figure 7 représente en coupe une sonde pour une application particulière de l'invention. L'application concerne un échographe à sonde rotative. Dans cette sonde, une antenne 61 tourne autour d'un axe 62. Cette antenne comporte deux éléments rayonnants: un élément 63 et un élément 64 diamétralement opposés l'un de l'autre par rapport à l'axe de rotation de l'antenne. Les deux éléments ont un même pouvoir focalisateur. Le premier élément rayonnant n'est pas muni des moyens d'homogénéisation de la directivité de l'invention, le deuxième est muni d'une lame absorbante 65 conforme à l'invention. Les deux éléments rayonnants 63 et 64 sont en forme de coupelle. L'élément 64 a un plus grand diamètre pour tenir compte de la pondération en fréquence apportée à la lame. En conséquence, la directivité de l'élément 64 est maintenant la même que la directivité pour une fréquence centrale du spectre à la directivité de l'élément rayonnant 63.

Une région du milieu peut être ainsi insonifiée par les deux éléments tour à tour. La partition du temps est compatible avec l'acquisition de signaux télévision: la vitesse de rotation est de l'ordre de 50 tours par seconde. Le signal rétrodiffusé reçu par l'élément 63 est traité pour obtenir une image traditionnelle. Une image traditionnelle est par exemple une image où chaque partie du milieu est représentée en fonction de l'amplitude de l'écho auquel elle a donné naissance. Le signal rétrodiffusé et reçu par l'élément rayonnant 64 est également traité pour obtenir une image traditionnelle. Mais, il peut également être traité par analyse spectrale par ailleurs pour obtenir une image de caractérisation du milieu. L'intérêt de cette solution réside dans la comparaison des images produites. Il est possible de superposer et de combiner ces deux images entre elles avec des moyens d'imagerie couleur. Le signal détecté classiquement est appliqué à la commande de luminosité d'un moniteur de télévision. Sa résolution est bonne, les contours d'image seront fins. Le signal détecté par l'élément 64 est appliqué à la commande de chrominance de ce moniteur. Sa résolution est moins bonne, mais par ailleurs correspond bien à la commande de chrominance dont la définition spatiale est moins exigente. Les images obtenues de cette façon sont alors plus claires et plus exactes.

Dans la pratique la lame d'absorption de l'invention a une épaisseur très supérieure à la longueur d'onde de l'onde centrale émise et retrodiffusée. Son épaisseur à mi-diamètre est environ d'un millimètre quand la fréquence de cette onde est de l'ordre de 20 MHz.

## Revendications

1. Sonde d'échographe du type comportant un élément rayonnant (2) pour rayonner par au moins une de ses faces (3), une onde acoustique quand il est soumis (1) à une excitation et/ou pour recevoir (41) par cette face une onde acoustique et élaborer un signal correspondant à cette onde quand il la reçoit, la sonde comportant des moyens (4) pour modifier la bande passante des différentes parties de la face de l'élement en fonction des coordonnées (u, v) de ces parties de manière à rendre la directivité de la sonde indépendante de la fréquence, caractérisée en ce que lesdits moyens pour modifier comportent une lame (4) absorbante, dont l'epaisseur est variable et dont le coefficient d'absorption varie en fonction de la fréquence, l'epaisseur de la lame pour lesdites parties, mesurée en termes de longueur d'onde de l'onde acoustique, étant telle que les absorptions correspondantes modifient les bandes passantes des dites parties.

2. Sonde selon la revendication 1, caractérisée en ce que l'épaisseur $e$ de la lame mesurée perpendiculairement à la face, est du type:

$$e(u, v) = e_0 + \sum_{i=0}^{i=m} a_i \cdot u^{m-i} \cdot v^i \qquad \text{où}$$

$e_0$ est une épaisseur choisie en fonction de la faisabilité de la lame, où,

$u$ et $v$ sont des coordonnées des points de la lame situés dans plan parallèle à la face, et où,

$m$ est le coefficient correcteur du coefficient d'absorption acoustique de la lame en fonction de la fréquence.

3. Sonde selon la revendication 2, caractérisée en ce que la lame possède un indice de propagation acoustique égal à celui du milieu soumis à l'onde acoustique.

4. Sonde selon la revendication 2, caractérisée en ce que la lame possède un indice de propagation acoustique différent de celui du milieu soumis à l'onde acoustique et en ce que la focalisation de la sonde est modifiée en conséquence.

5. Sonde selon l'une quelconque des revendications 2 à 4, caractérisée en ce que le matériau de la lame est tel que son coefficient correcteur vaut approximativement deux et en ce que les paramètres a, du polynome sont choisis tels que $a_1 = 0$ et etels que $a_0 = a_2$.

6. Sonde selon la revendication 5, caractérisée en ce que les paramètres $a_0$, $a_2$, et $e_0$ sont choisis tels que la lame puisse être comprise entre deux sphères pour faciliter sa fabrication.

7. Sonde selon la revendication 5 ou 6, caractérisée en ce que le matériau de la lame est une résine polymérisée.

8. Sonde selon l'une quelconque des revendications 2 à 4, caractérisée en ce que le matériau de la lame est tel que son coefficient correcteur vaut approximativement un et que la lame comporte quatre parties (6—9) pyramidales symétriques deux à deux l'une de l'autre et reliées ensemble par leur sommet (11) et l'une à l'autre par des flancs (111).

9. Sonde selon l'une quelconque des revendications 2 à 4, caractérisée en ce que le matériau de la lame est tel que son coefficient correcteur vaut approximativement un, que la lame est de révolution autour d'un axe et qu'elle admet un profil de forme sensiblement triangulaire parallèlement à cet axe (figure 4a).

10. Sonde selon la revendication 8 ou 9, caractérisée en ce que le matériau de la lame est peu visco-élastique et est chargé d'inhomogénéïtés diffusantes.

11. Sonde selon la revendication 1, caractérisée en ce que l'élément rayonnant (15) comporte une pluralité de transducteurs (17) arrangés (v) sur la face rayonnante et en ce que les moyens pour modifier comporte en outre des filtres (31—35) de fréquence pour agir sur l'excitation (24—28) et/ou le signal correspondant à l'onde et dont la bande passante est déterminée en fonction de la position, sur la face, des transducteurs auxquels chacun de ces filtres est connecté.

12. Sonde selon la revendication 11 et 2, caractérisée en ce que les transducteurs sont alignés les uns à côté des autres selon une direction perpendiculaire (v) à l'axe de rayonnement (Z) et en ce que les moyens pour modifier comportent une lame cylindrique (30) dont les génératrices sont parallèles à la direction d'alignement et au moins un jeu (31—35) de filtres de fréquences pour affecter ces filtres à des transducteurs de manière à permettre une homogénéisation de la directivité de la sonde en fonction de la fréquence selon deux axes (u, v) perpendiculaires à l'axe de propagation (figure 6a).

13. Sonde selon la revendication 12, caractérisée en ce qu'elle comporte un jeu de filtres et des moyens de commutation (51 à 55) interposés entre les filtres et les transducteurs pour commuter des transducteurs aux filtres de ce jeu et pour permettre ainsi un balayage du milieu examiné.

14. Sonde selon la revendication 12, caractérisée en ce qu'elle comporte une pluralité de jeux de filtres, et des moyens de commutation disposés en amont des jeux pour alimenter chaque transducteur au travers des filtres de jeux qui lui sont affectés.

15. Sonde selon l'une quelconque des revendications 1 à 14, caractérisée en ce que la lame est plaquée contre la face de l'élément (figure 5).

16. Sonde selon l'une quelconque des revendications 1 à 15, caractérisée en ce qu'elle comporte en outre un autre élément rayonnant utilisé alternativement avec le premier pour permettre une comparaison entre les signaux élaborés par chacun d'eux (figure 7).

17. Echographe comportant une sonde selon l'une quelconque des revendications 1 à 16 pour mesurer les paramètres de caractérisation tissulaire d'un tissu étudié.

**Patentansprüche**

1. Echograph-Sonde vom Typ mit einem Strahlerelement (2), um wenigstens an einer ihrer Flächen (3) eine Strahlwelle abzustrahlen, wenn es einer Erregung ausgesetzt (1) wird, und/oder um über diese Fläche eine Schallwelle zu empfangen (41) sowie um ein Signal zu erzeugen, das dieser Welle entspricht, wenn es sie empfängt, wobei die Sonde Mittel (4) umfaßt, um das Durchlaßband der verschiedenen Teile der Fläche des Elements in Abhängigkeit von den Koordinaten (u, v) dieser Teile zu verändern, so daß die Richtwirkung der Sonde von der Frequenz unabhängig gemacht wird, dadurch gekennzeichnet, daß die genannten Mittel zum Verändern eine absorbierende Scheibe (4) umfassen, deren Dicke veränderbar ist und deren Absorptionskoeffizient in Abhängigkeit von der Frequenz variiert, wobei die Dicke der Scheibe für diese Teile, welche als Wellenlänge der Schallwelle gemessen wird, derart ist, daß die entsprechenden Absorptionen die Durchlaßbänder dieser Teile verändern.

2. Sonde nach Anspruch 1, dadurch gekennzeichnet, daß die Dicke e der Scheibe, die zu der Fläche senkrecht gemessen wird, von folgendem Typ ist:

$$e\,(u,\,v) = e_0 + \sum_{i=0}^{i=m} a_i \cdot u^{m-i} \cdot v^i$$

worin:

$e_0$ eine in Abhängigkeit von der Herstellbarkeit der Scheibe ausgewählte Dicke ist;

$u$ und $v$ Koordinaten der Punkte der Scheibe sind, die in einer zur Fläche parallelen Ebene liegen, und

$m$ der Korrektur-Koeffizient der Schallabsorption der Scheibe in Abhängigkeit von der Frequenz ist.

3. Sonde nach Anspruch 2, dadurch gekennzeichnet, daß die Scheibe einen Schallausbreitungsindex aufweist, der demjenigen des Mediums, das der Schallwelle ausgesetzt ist, entspricht.

4. Sonde nach Anspruch 2, dadurch gekennzeichnet, daß die Scheibe einen Schallausbreitungsindex aufweist, der von demjenigen des der Schallwelle ausgesetzten Mediums verschieden ist, und daß die Fokussierung der Sonde entsprechend verändert wird.

5. Sonde nach einem der Ansprüche 2 bis 4, dadurch gekennzeichnet, daß das Material der Scheibe so ist, daß sein Korrektur-Koeffizient ungefähr zwei beträgt, und daß die Parameter $a_i$ des Polynoms so gewählt sind, daß $a_1 = 0$ und $a_0 = a_2$.

6. Sonde nach Anspruch 5, dadurch gekennzeichnet, daß die Parameter $a_0$, $a_2$ und $e_0$ so gewählt sind, daß die Scheibe zwischen zwei Kugeln enthalten sein kann, um ihre Herstellung zu erleichtern.

7. Sonde nach Anspruch 5 oder 6, dadurch gekennzeichnet, daß das Material der Scheibe aus polymerisiertem Harz besteht.

8. Sonde nach einem der Ansprüche 2 bis 4, dadurch gekennzeichnet, daß das Material der Scheibe so ist, daß ihr Korrektur-Koeffizient ungefähr eins beträgt, und daß die Scheibe vier pyramidenförmige Teile (6—9) aufweist, welche zueinander paarweise symmetrisch sind und an ihren Scheiteln (11) sowie an Flanken (111) miteinander verbunden sind.

9. Sonde nach einem der Ansprüche 2 bis 4, dadurch gekennzeichnet, daß das Material der Scheibe so ist, daß ihr Korrektur-Koeffizient ungefähr eins beträgt, daß die Scheibe um eine Achse rotationssymetrisch ist und ein Profil mit einer im wesentlichen dreieckigen Form parallel zu dieser Achse (Figur 4a) annimmt.

10. Sonde nach Anspruch 8 oder 9, dadurch gekennzeichnet, daß das Material der Scheibe schwach visco-elastisch ist und mit eine Streuwirkung verursachenden Inhomogenitäten befrachtet ist. ·

11. Sonde nach Anspruch 1, dadurch gekennzeichnet, daß das Strahlerelement (15) mehrere auf der Strahlerfläche angeordnete (v) Wandler (17) umfaßt und daß die Mittel zum Verändern ferner Frequenzfilter (31—35) umfassen, um auf die Erregung (24—28) und/oder auf das der Welle entsprechende Signal einzuwirken, und deren Durchlaßband in Abhängigkeit von der Position der Wandler auf der Fläche bestimmt wird, an welche jedes dieser Filter angeschlossen ist.

12. Sonde nach Anspruch 11 und 2, dadurch gekennzeichnet, daß die Wandler entlang einer zur Strahlachse (Z) senkrechten Richtung (v) nebeneinander ausgerichtet sind und daß die Mittel zum Verändern eine zylindrische Platte (30) umfassen, deren Mantellinien zur Ausricht-Richtung sowie zu wenigstens einem Satz (31—35) von Frequenzfiltern parallel sind, um diesen Filter Wandler zuzuordnen, so daß eine Homogenisierung der Richtwirkung der Sonde in Abhängigkeit von der Frequenz entlang zwei Achsen (u, v), die zur Ausbreitungsachse (Figur 6a) senkrecht sind, ermöglicht wird.

13. Sonde nach Anspruch 12, dadurch gekennzeichnet, daß sie einen Satz von Filtern sowie Umschaltmittel (51 bis 55) umfaßt, die zwischen den Filtern und den Wandlern eingefügt sind, um Wandler zu den Filtern dieses Satzes umzuschalten und um so eine Abtastung des untersuchten Mediums zu ermöglichen.

14. Sonde nach Anspruch 12, dadurch gekennzeichnet, daß sie mehrere Filtersätze sowie Umschaltmittel umfaßt, die vor den Sätzen angeordnet sind, um jeden Wandler über ihm zugewiesene Filter von Sätzen zu speisen.

15. Sonde nach einem der Ansprüche 1 bis 14, dadurch gekennzeichnet, daß die Scheibe gegen die Fläche des Elements (Figur 5) angelegt ist.

16. Sonde nach einem der Ansprüche 1 bis 15, dádurch gekennzeichnet, daß sie ferner ein weiteres Strahlerelement umfaßt, das wechselweise zusammen mit dem ersten Element verwendet wird, um einen Vergleich zwischen den von jedem von ihnen erzeugten Signalen (Figur 7) zu ermöglichen.

17. Echograph mit einer Sonde gemäß einem der Ansprüche 1 bis 16, um die Parameter der Gewebe-Kennwerte eines untersuchten Gewebes zu messen.

## Claims

1. An echographic probe of the type comprising a radiating element (2) in order, from at least one of its faces (3), to radiate an acoustic wave when it is subjected (1) to excitation and/or in order, via this face, to receive (41) an acoustic wave and to derive a signal corresponding to this wave when it receives same, said probe comprising means (4) in order to modify the band passing through different parts of the face of the element as a function of coordinates (u and v) of said parts in such a manner as to render the directivity of the probe independent of frequency, characterized in that the said means for such modification comprise an absorbing sheet (4), the thickness of the sheet for the said parts, measured in terms of the wave length of the acoustic wave, being such that the corresponding absorption values modify the pass bands of the said parts.

2. The probe as claimed in claim 1, characterized in that the thickness $e$ of the sheet measured perpendicularly to the face, is of the type:

$$e\,(u,\,v) = e_o + \sum_{i\,=\,o}^{i\,=\,m} a_i \cdot u^{m-i} \cdot v^i$$

wherein

$e_o$ is a thickness selected as a function of the feasibility of the sheet, wherein

$u$ and $v$ are the coordinates of points of the sheet situated in a plane parallel to the face, and wherein $m$ is the correction coefficient of the acoustic absorption coefficient of the sheet as a function of the frequency.

3. The probe as claimed in claim 2, characterized in that the sheet possesses an index of acoustic propagation equal to that of the medium subjected to the acoustic wave.

4. The probe as claimed in claim 2, characterized in that the sheet possesses an index of acoustic propagation different to that of the medium subjected to the acoustic wave and in that the focussing of the probe is modified in consequence thereof.

5. The probe as claimed in any one of the preceding claims 2 through 4, characterized in that the material of the sheet is such that the correction coefficient thereof is equal to approximately two and in that the parameters $a_i$ of the polynomial are selected so that $a_i = 0$ and $a_o = a_2$.

6. The probe as claimed in claim 5, characterized in that the parameters $a_o$, $a_2$ and $e_o$ are selected so that the sheet may be comprised between two spheres in order to facilitate the manufacture thereof.

7. The probe as claimed in claim 5 or claim 6, characterized in that the material of the sheet is a polymerized resin.

8. The probe as claimed in any one of the preceding claims 2 through 4, characterized in that the material of the sheet is such that its correction coefficient is approximately equal to unity and in that the sheet comprises four pyramidal parts (6 through 9) which are symmetrical in pairs and are connected together by their apex (11) and in pairs by the flanks (111) thereof.

9. The probe as claimed in any one of the preceding claims 2 through 4, characterized in that the material of the sheet is such that the correction coefficient thereof is approximately equal to unity, that the sheet is a body of revolution about an axis and in that it admits a profile with a form which is substantially triangular in a direction parallel to this axis (figure 4a).

10. The probe as claimed in claim 8 or in claim 9, characterized in that the material of the sheet is viscoelastic and is charged with diffusing inhomogeneities.

11. The probe as claimed in claim 1, characterized in that the radiating element (15) comprises a plurality of transductors (17) arranged (v) on the radiating face and in that the modifying means furthermore comprises frequency filters (31 through 35) in order to act on the excitation (24 through 28) and/or the signal corresponding to the wave and whose pass band is determined as a function of the position, on the said face, of the transductors with which each of such filters is connected.

12. The probe as claimed in claims 11 and 2, characterized in that the transductors are aligned alongside each other in a direction (v) perpendicular to the axis (Z) of radiation and in that the modifying means comprise a cylindrical sheet (30) whose generatrices are parallel to the direction of alignment and at least one set of frequency filters (31 through 35) in order to relate these filters to transductors in such a manner as to permit a homogenization of the directivity of the probe as a function of the frequency along two axes (u and v) perpendicular to the axis of propagation (figure 6a).

13. The probe as claimed in claim 12, characterized in that it comprises a set of filters and switching

10

means (51 through 55) interposed between the filters and the transductors in order to connect transducers with filters of this set and in order to thus make possible sweeping of the medium under examination.

14. The probe as claimed in claim 12, characterized in that it comprises a plurality of sets of filters and switching means placed on the input side of such sets in order to feed each transductor through filters of sets which are related to it.

15. The probe as claimed in any one of the preceding claims 1 through 14, characterized in that the sheet is applied to the face of the element (figure 5).

16. The probe as claimed in any one of the preceding claims 1 through 15, characterized in that it furthermore comprises another radiating element used alternatively in relation to the first one in order to permit comparison between the signals processed by each of them (figure 7).

17. An echograph comprising a probe as claimed in any one of the preceding claims 1 through 16 in order to measure the inherent parameters of a tissue being examined.

Fig.1a

Fig.1b

Fig.2

Fig. 3a

Fig.3c

Fig.3b

Fig.4a

Fig.4b

Fig.5

Fig.7

# Fig.6a

# Fig.6b